# EUROPÄISCHE PATENTSCHRIFT

(11) **EP 1 818 517 B1**
(45) Veröffentlichungstag und Bekanntmachung des Hinweises auf die Patenterteilung: **25.07.2012**
(21) Anmeldenummer: 06025638.5
(22) Anmeldetag: 12.12.2006
(51) Int. Cl.: F01L 9/04, F01L 13/00

(54) **Verbrennungsmotor mit einem elektrischen Ventiltrieb**
Engine with electric valve drive
Moteur à commande de soupapes électrique

(30) Priorität: 09.02.2006 DE 102006005943
(43) Veröffentlichungstag der Anmeldung: 15.08.2007
(73) Patentinhaber: Bayerische Motoren Werke Aktiengesellschaft, 80809 München (DE)
(72) Erfinder: Meyer, Johannes, 85757 Karlsfeld (DE)

(56) Entgegenhaltungen:
- EP-A- 1 457 645
- WO-A-03/016683
- WO-A-2004/044391
- DE-A1- 2 838 681
- DE-A1- 3 621 080
- DE-A1- 4 411 434
- FR-A- 2 803 626
- US-A- 5 080 055

## Beschreibung

Die vorliegende Erfindung betrifft einen Verbrennungsmotor mit einem elektrischen Ventiltrieb gemäß den Merkmalen des Patentanspruches 1.

Ein derartiger Verbrennungsmotor ist aus der EP 1 457 645 A1 bekannt. Zum technischen Hintergrund der vorliegenden Erfindung zählt ferner die DE 44 11 434 A1.

Aus der DE 101 40 461 A1 ist ein elektrischer Ventiltrieb für einen Verbrennungsmotor bekannt, bei dem ein Ventil mittels eines nockenartigen Drehaktors entgegen der Kraft der Ventilschließfeder geöffnet werden kann. Der nockenartige Drehaktor weist ein auf einer Welle angeordnetes nockenartiges Element auf, das auf ein Übertragungselement wirkt, welches wiederum gegen ein Ende des Ventilschafts drückt. Die Welle, auf der das nockenartige Element angeordnet ist, kann mittels eines Elektromotors verschwenkt werden. Um während des Öffnungsvorgangs nicht die gesamte zum Öffnen des Ventils erforderliche Energie über den Elektromotor aufzubringen, ist eine Schenkelfeder vorgesehen, die gegen einen mit der Welle bzw. mit dem nockenartigen Element verbundenen Schwenkhebel drückt. Wenn sich das Ventil in seiner Schließstellung befindet, ist die Schenkelfeder maximal gespannt. Während des Öffnungsvorgangs wird das nockenartige Element bzw. die Welle durch den Elektromotor in eine Öffnungsstellung verschwenkt. Dabei wird die Öffnungsbewegung durch das von der Schenkelfeder auf den Schwenkhebel ausgeübte Drehmoment unterstützt, so dass lediglich ein Teil der Öffnungsenergie von dem Elektromotor aufgebracht werden muss.

Aus der DE 102 52 991 A1 ist eine Weiterentwicklung des in DE 101 40 461 A1 beschriebenen Ventiltriebs bekannt. Bei dem Ventiltrieb der DE 102 52 991 A1 weist das nockenartige Element einen ersten und einen zweiten nockenartigen Abschnitt auf. Der erste nockenartige Abschnitt ist für Teillastbetrieb vorgesehen und weist einen geringeren Maximalhub als der zweite nockenartige Abschnitt auf.

Aufgabe der Erfindung ist es, einen Verbrennungsmotor mit elektrischem Ventiltrieb zu schaffen, der hinsichtlich seiner Leistung und seines Kraftstoffverbrauchs verbessert ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Verbrennungsmotor mit mindestens einem, vorzugsweise aber mehreren Zylindern. Jeder Zylinder weist mindestens zwei Einlassventile auf, die jeweils über einen elektrischen Ventiltrieb mit einem Doppelnocken, wie in der DE 102 52 991 A1 beschrieben ist, angesteuert werden. Es sei ausdrücklich darauf hingewiesen, dass sämtliche Merkmale, die in der DE 102 52 991 A1 beschrieben sind, zum Gegenstand der vorliegenden Anmeldung gemacht werden, auch wenn sie nicht explizit in der vorliegenden Anmeldung erwähnt sind. Einzelne Merkmale bzw. Formulierungen aus der DE 102 52 991 A1 sollen also bei Bedarf in die vorliegende Anmeldung aufgenommen werden können. Bei einem Verbrennungsmotor gemäß der vorliegenden Erfindung ist dem ersten Einlassventil ein im Bereich des Zylinderkopfs des Verbrennungsmotors schwenkbar angeordnetes erstes Schwenkelement zugeordnet. Dem zweiten Einlassventil ist dementsprechend ein im Bereich des Zylinderkopfes des Verbrennungsmotors schwenkbar angeordnetes zweites Schwenkelement zugeordnet. Jedes der beiden Schwenkelemente weist, entsprechend dem in der DE 102 52 991 A1 beschriebenen Schwenkelementes einen ersten nockenartigen Umfangsabschnitt auf, der dazu vorgesehen ist, in einem Teillastbetrieb des Verbrennungsmotors das zugeordnete Einlassventil teilweise zu öffnen, und einen zweiten nockenartigen Umfangsabschnitt, der dazu vorgesehen ist, das zugeordnete Einlassventil maximal zu öffnen. Die zweiten nockenartigen Umfangsabschnitte weisen also einen größeren Maximalhub auf als die ersten nockenartigen Umfangsabschnitte. Analog zur DE 102 52 991 A1 wird die Schwenkbewegung der beiden Schwenkelemente, durch die die Einlassventile geöffnet werden, durch mindestens einen Elektromotor gesteuert. Die beiden Schwenkelemente können dabei auf ein und derselben Welle angeordnet und somit durch einen gemeinsamen Elektromotor betätigt werden. Alternativ dazu können die Schwenkelemente auch jeweils durch einen separaten Elektromotor betätigt werden bzw. auf einer separaten Welle angeordnet sein.

Der Kern der Erfindung besteht darin, dass der elektrische Ventiltrieb derart "beschaffen" ist, dass die Einlassventile im Teillastbetrieb, d.h. wenn die Einlassventile über die ersten nockenartigen Umfangsabschnitte der Schwenkelemente geöffnet werden, sich voneinander unterscheidende Öffnungscharakteristika aufweisen. Anders ausgedrückt, die Öffnungsbewegungen der Einlassventile laufen nicht exakt parallel bzw. nicht exakt gleichförmig ab. Dadurch wird erreicht, dass im Teillastbetrieb eine verbesserte Verwirbelung bzw. ein höherer Drall des in den Zylinder eingebrachten Kraftstoff-/Luftgemischs entsteht, wodurch sich die Verbrennung und somit die Leistung bzw. die Ausnutzung der in dem Kraftstoff-/Luftgemisch enthaltenen Energie verbessert.

Nach einer Weiterbildung der Erfindung kann vorgesehen sein, dass im Teillastbetrieb der "Öffnungsbeginn" des ersten Einlassventils zeitlich, d.h. auf den Kurbelwellenwinkel bezogen, vor dem Öffnungsbeginn des zweiten Einlassventils liegt. Anders ausgedrückt, zu Beginn des Ansaugtaktes wird asymmetrisch, d.h. zunächst nur über eines der beiden Einlassventile, Kraftstoff-/Luftgemisch in den Zylinder eingesaugt. Wenn dann auch das zweite Einlassventil öffnet, hat sich im Zylinder bereits ein hinreichend hoher Drall entwickelt, so dass auch das übrige im weiteren Verlauf des Ansaugtaktes eingesaugte Kraftstoff-/Luftgemisch gut verwirbelt und verbrannt werden kann.

Unterschiedliche Öffnungscharakteristika der beiden Einlassventile im Teillastbetrieb können beispielsweise dadurch erreicht werden, dass die ersten nockenartigen Umfangsabschnitte der Schwenkelemente unterschiedliche Geometrien aufwiesen. Die ersten nockenartigen Umfangsabschnitte können beispielsweise so beschaffen sein, dass sich ein unterschiedlicher Öffnungsbeginn ergibt. Alternativ oder ergänzend dazu kann vorgesehen sein, dass die ersten nockenartigen Umfangsabschnitte unterschiedliche Maximalhübe aufweisen. Dies muss aber nicht so sein. Die beiden ersten nockenartigen Umfangsabschnitte können auch denselben Maximalhub aufweisen.

Die ersten nockenartigen Umfangsabschnitte müssen aber nicht notwendigerweise eine unterschiedliche Geometrie aufweisen. Denkbar ist, dass die beiden ersten nockenartigen Umfangsabschnitte dieselbe Geometrie aufweisen, jedoch in Schwenkrichtung zueinander versetzt sind, so dass die Bewegungen der Einlassventile im Teillastbetrieb gleichförmig aber phasenverschoben sind.

Nach einer Weiterbildung der Erfindung ist vorgesehen, dass in Betriebszuständen, in denen die Einlassventile durch die zweiten nockenartigen Umfangsabschnitte geöffnet werden, insbesondere bei Volllastbetrieb des Verbrennungsmotors, das erste Einlassventil und das zweite Einlassventil dieselbe Öffnungscharakteristik aufweisen. Vorzugsweise wird dies dadurch erreicht, dass die zweiten nockenartigen Umfangsabschnitte dieselbe Geometrie aufweisen und zeitlich synchron angesteuert werden. In einfacher Weise kann dies, wie bereits erwähnt, erreicht werden, wenn die Schwenkelemente auf ein und derselben Welle angeordnet sind und durch einen gemeinsamen Elektromotor angesteuert werden.

## Patentansprüche

1. Verbrennungsmotor mit
- mindestens einem Zylinder, der ein erstes Einlassventil aufweist,
- einem dem ersten Einlassventil zugeordneten ersten, im Bereich eines Zylinderkopfes des Verbrennungsmotors schwenkbar angeordneten ersten Schwenkelement,
- wobei das erste Schwenkelement
• einen ersten nockenartigen Umfangsabschnitt aufweist, der dazu vorgesehen ist, in einem Teillastbetrieb des Verbrennungsmotors das erste Einlassventil teilweise zu öffnen, und
• einen zweiten nockenartigen Umfangsabschnitt, der dazu vorgesehen ist, das erste Einlassventil maximal zu öffnen und,
• die Schwenkbewegung des ersten Schwenkelements durch welches das erste Einlassventil geöffnet wird, durch einen Elektromotor gesteuert wird,
**dadurch gekennzeichnet,**
**dass** der Zylinder zusätzlich zu dem ersten Einlassventil ein zweites Einlassventil aufweist,
**dass** ein dem zweiten Einlassventil zugeordnetes zweites im Bereich eines Zylinderkopfes des Verbrennungsmotors schwenkbar angeordnetes zweites Schwenkelement vorgesehen ist, wobei das zweite Schwenkelement
• einen ersten nockenartigen Umfangsabschnitt aufweist, der dazu vorgesehen ist, in einem Teillastbetrieb des Verbrennungsmotors das zweite Einlassventil teilweise zu öffnen, und
• einen zweiten nockenartigen Umfangsabschnitt, der dazu vorgesehen ist, das zweite Einlassventil maximal zu öffnen und, wobei
• die Schwenkbewegung des zweiten Schwenkelements durch welches das zweite Einlassventil geöffnet wird, ebenfalls durch einen Elektromotor gesteuert wird, wobei beim Öffnen der Einlassventile im Teillastbetrieb das erste Einlassventil eine sich von dem zweiten Einlassventil unterscheidende Öffnungscharakteristik aufweist.

2. Verbrennungsmotor nach Anspruch 1,
**dadurch gekennzeichnet, dass** im Teilllastbetrieb der Öffnungsbeginn des ersten Einlassventils zeitlich vor dem Öffnungsbeginn des zweiten Einlassventils liegt.

3. Verbrennungsmotor nach einem der Ansprüche 1 oder 2,
**dadurch gekennzeichnet, dass** die beiden Schwenkelemente auf einer gemeinsamen Welle angeordnet sind.

4. Verbrennungsmotor nach einem der Ansprüche 1 oder 2,
**dadurch gekennzeichnet, dass** jedes der beiden Schwenkelemente auf einer separaten Welle angeordnet ist und durch einen separaten Elektromotor angesteuert wird.

5. Verbrennungsmotor nach einem der Ansprüche 1 bis 4,
**dadurch gekennzeichnet, dass** die beiden ersten nockenartigen Umfangsabschnitte der Schwenkelemente unterschiedliche Geometrien aufweisen.

6. Verbrennungsmotor nach einem der Ansprüche 1 bis 4,
**dadurch gekennzeichnet, dass** die beiden ersten nockenartigen Umfangsabschnitte der Schwenkelemente dieselbe Geometrie aufweisen, jedoch in Schwenkrichtung einen Phasenversatz in Bezug aufeinander aufweisen.

7. Verbrennungsmotor nach einem der Ansprüche 1 bis 5,
**dadurch gekennzeichnet, dass** die beiden ersten nockenartigen Umfangsabschnitte der Schwenkelemente denselben Maximalhub aufweisen.

8. Verbrennungsmotor nach einem der Ansprüche 1 bis 5,
**dadurch gekennzeichnet, dass** die beiden ersten nockenartigen Umfangsabschnitte der Schwenkelemente unterschiedliche Maximalhübe aufweisen.

9. Verbrennungsmotor nach einem der Ansprüche 1 bis 8,
**dadurch gekennzeichnet, dass** in Betriebsphasen, in denen die Einlassventile durch die zweiten nockenartigen Umfangsabschnitt der Schwenkelemente geöffnet werden, die beiden Einlassventile eine identische Öffnungscharakteristik aufweisen.

10. Verbrennungsmotor nach Anspruch 9,
**dadurch gekennzeichnet, dass** die zweiten nockenartigen Umfangsabschnitte ein und dieselbe Geometrie aufweisen und in ein und derselben Phasenlage angeordnet sind.

## Claims

1. An internal combustion engine comprising
- at least one cylinder having a first intake valve,
- a first swivel element associated with the first intake valve and adapted to swivel in the neighbourhood of a cylinder head of the engine,
- wherein the first swivel element
• has a first cam-like peripheral portion adapted partially to open the first intake valve during part-load operation of the engine, and
• a second cam-like peripheral portion adapted to open the first intake valve to the maximum extent and,
• the motion of the first swivel element for opening the first intake valve is controlled by an electric motor,
**characterised in that**
in addition to the first intake valve the cylinder has a second intake valve, a second swivel element associated with the first intake valve and disposed so as to swivel in the neighbourhood of a cylinder head of the engine is provided, wherein the second swivel element
• has a first cam-like peripheral portion adapted partially to open the second intake valve during part-load operation of the engine, and
• has a second cam-like peripheral portion adapted to open the second intake valve to the maximum extent, wherein
• the swivelling motion of the second swivel element for opening the second intake valve is likewise controlled by an electric motor, wherein when the intake valves are opened during part-load operation the first intake valve has a different opening characteristic from the second intake valve.

2. An engine according to claim 1,
**characterised in that** during part-load operation the first intake valve begins to open before the second intake valve begins to open.

3. An engine according to claim 1 or claim 2,
**characterised in that** the two swivel elements are disposed on a common shaft.

4. An engine according to claim 1 or claim 2,
**characterised in that** each of the two swivel elements is mounted on a separate shaft and actuated by a separate electric motor.

5. An engine according to any of claims 1 to 4,
**characterised in that** the first two cam-like peripheral portions of the swivel elements have different shapes.

6. An engine according to any of claims 1 to 4,
**characterised in that** the first two cam-like peripheral portions of the swivel elements have the same shape but have a phase offset from one another in the direction of swivelling.

7. An engine according to any of claims 1 to 5,
**characterised in that** the first two cam-like peripheral portions of the swivel elements have the same stroke.

8. An engine according to any of claims 1 to 5,
**characterised in that** the first two cam-like peripheral portions of the swivel elements have different maximum strokes.

9. An engine according to any of claims 1 to 8,
**characterised in that** in operating phases in which the intake valves are open by the second cam-like peripheral portion of the swivel elements, the two intake valves have an identical opening characteristic.

10. An engine according to claim 9,
**characterised in that** the two cam-like peripheral portions have one and the same shape and are disposed in one and the same phase position.

## Revendications

1. Moteur à combustion comportant :
- au moins un cylindre équipé d'une première soupape d'admission,
- un premier élément pivotant associé de manière pivotante à la première soupape d'admission dans la première région de la culasse du moteur à combustion,
- le premier élément pivotant ayant :
* un premier segment de périphérie en forme de came pour ouvrir partiellement la première soupape d'admission pour une première plage de charge partielle du moteur à combustion, et
* un segment périphérique en forme de came pour ouvrir au maximum la première soupape d'admission, et
* le mouvement de pivotement du premier élément pivotant qui ouvre la première soupape d'admission est commandé par un moteur électrique,
moteur à combustion **caractérisé en ce que**
le cylindre comporte une seconde soupape d'admission en plus de la première soupape d'admission,
- un second élément pivotant est installé de manière pivotante dans une seconde région de la culasse du moteur à combustion associé à la seconde soupape d'admission, ce second élément pivotant,
* ayant un premier segment périphérique en forme de came pour ouvrir partiellement la seconde soupape d'admission lorsque le moteur à combustion fonctionne selon un mode de charge partielle,
* un second segment périphérique en forme de came pour ouvrir au maximum la seconde soupape d'admission, et
* le mouvement de pivotement du second élément pivotant et qui ouvre la seconde soupape d'admission est également commandé par un moteur électrique et à l'ouverture de la soupape d'admission dans le mode de charge partielle, la première soupape d'admission a une caractéristique d'ouverture différente de celle de la seconde soupape d'admission.

2. Moteur à combustion selon la revendication 1,
**caractérisé en ce que**
dans le mode de charge partielle, le début d'ouverture de la première soupape d'admission précède le début d'ouverture de la seconde soupape d'admission.

3. Moteur à combustion selon l'une des revendications 1 ou 2,
**caractérisé en ce que**
les deux éléments pivotants sont installés sur un arbre commun.

4. Moteur à combustion selon l'une des revendications 1 ou 2,
**caractérisé en ce que**
chacun des deux éléments pivotant est installé sur un arbre distinct et sont commandés par un moteur électrique distinct.

5. Moteur à combustion selon l'une des revendications 1 à 4,
**caractérisé en ce que**
les deux premiers segments périphériques en forme de came des éléments pivotant ont des géométries différentes.

6. Moteur à combustion selon l'une des revendications 1 à 4,
**caractérisé en ce que**
les deux premiers segments périphériques en forme de came des éléments pivotants ont la même géométrie mais sont déphasés l'un par rapport à l'autre dans la direction de pivotement.

7. Moteur à combustion selon l'une des revendications 1 à 5,
**caractérisé en ce que**
les deux premiers segments périphériques en forme de came des éléments pivotants ont la même course maximale.

8. Moteur à combustion selon l'une des revendications 1 à 5,
**caractérisé en ce que**
les deux premiers segments périphériques en forme de came des éléments pivotants ont des courses maximales différentes.

9. Moteur à combustion selon l'une des revendications 1 à 8,
**caractérisé en ce que**
dans les phases de fonctionnement dans lesquelles les soupapes d'admission sont ouvertes par le second segment périphérique en forme de came des éléments pivotants, les deux soupapes d'admission ont une caractéristique d'ouverture identique.

10. Moteur à combustion selon la revendication 9,
**caractérisé en ce que**
les seconds segments périphériques en forme de came ont une seule géométrie et ont une seule et même phase.
